# EUROPEAN PATENT SPECIFICATION

(11) **EP 0 945 781 B1**
(45) Date of publication and mention of the grant of the patent: **04.08.2004**
(21) Application number: 99302078.3
(22) Date of filing: 18.03.1999
(51) Int. Cl.: G06F 3/12, B41J 2/175

(54) **System and method for automated calibration, monitoring and reporting of print capacity and printer ink and toner levels**
System und Verfahren die, die automatische Justierung, Druckerkapazität, Tinten und Tonerpegel, überwachen und melden
Système et méthode de calibration, surveillance et signalisation automatisée de capacité d'impression et niveaux de cartouche et d'encre d'imprimante

(30) Priority: 27.03.1998 US 49631
(43) Date of publication of application: 29.09.1999
(73) Proprietor: Compaq Computer Corporation, Houston, Texas 77070-2698 (US)
(72) Inventor: McGraw, Montgomery C., Spring, Texas 77379 (US)
(74) Representative: Brunner, Michael John

(56) References cited:
- EP-A- 0 825 567
- US-A- 5 731 824

## Description

The invention relates to the field of printing technology, and more particularly, to techniques for the automated monitoring and reporting of ink and toner levels in ink-jet and laser printer cartridges.

The use of inexpensive printers has expanded remarkably in recent years. Even ink-jet printers are now capable of printing near photo quality colour images. However, this usually requires that a special type of paper be used. Since some of these special types of printer papers are not truly made of paper, such printing materials will generally be referred to as "print media" in the present patent application.

Ink-jet printers typically draw their ink from one or more ink cartridges. These ink cartridges are typically translucent if not opaque. Furthermore, certain ink-jet manufacturers include a spongy material inside the cartridges to control the rate of flow of ink from the cartridge. Under certain conditions the ink in an ink cartridge might be viscous enough to attach to the walls of the cartridge. All of these foregoing factors make it difficult -- if not impossible -- for a user to determine the amount of ink remaining in an ink cartridge of an ink-jet printer, let alone obtain information about the remaining print capacity of an ink-jet cartridge.

In an effort to facilitate obtaining information about ink level in a cartridge, certain manufacturers have included a graphical ink level indicator in the printer driver software. These ink level indicators let a user determine the exact level of ink in the cartridge, based upon information received from the printer by either optical or electronic means.

EP-A-0 825 567 teaches an ink level sensing system for continuously monitoring the total ink consumption of a printing apparatus having a print head by using default ink consumption valves for each type of printer action (printing, purging etc.) according to a table, and generating a warning when the total ink consumption exceeds a predetermined low ink level.

US-A-5,731,824 teaches an arrangement for continuously measuring the ink level of an ink cartridge by sensing the weight of the ink reservoir, and generating a signal proportional to the available ink, whereby a graphic display is generated allowing a user to continuously monitor the remaining ink level and having means for generating a warning signal when the ink level is below a predetermined threshold value.

It would be desirable if information about the amount of ink remaining in an ink-jet printer cartridge could be conveyed to a user in terms of the number of days or pages that may be printed before the ink cartridge needs replacement or refilling. It would also be helpful if information about the remaining print capacity of an ink-jet printer cartridge could be conveyed to a user by graphical or digital display means.

It has additionally been found desirable to associate this "print capacity" information with a threshold function in order to generate a timely warning about the impending exhaustion of an ink-jet cartridge. Still further, it would be desirable for a computer system to be able to monitor ink consumption and automatically generate a warning to a user when the ink in an ink-jet cartridge is too low, or about to run out. It would also be useful if the low ink level alert message generated by the system were also to provide a user with the specific part number and ordering information for the cartridge that is about to be exhausted.

It would additionally be desirable if information about the average size of individual ink drops as well as information about the amount of ink that is loaded in a cartridge at the time of manufacturing were used to calibrate a graphical or digital ink level display. It would also be helpful if the graphical or digital display of the remaining print capacity is visually depicted in a way as to make it useful to a variety of users -- from a home user who uses an ink-jet printer only occasionally to a home office or a small office where an ink-jet printer may be used moderately to heavily.

It is a shortcoming and deficiency of the prior art that the desirable and helpful features discussed above have not been functionally obtained to date.

It is therefore a primary object of the present invention to automate the calibration, monitoring and reporting of the ink level in printing devices using ink cartridges. It is a further object of the present invention to provide a calibrated graphical or digital display of the ink level in an ink cartridge. It is also an object of the present invention to provide the calibration in practical and useful terms such as by expressing the remaining print capacity of an ink cartridge in terms of the number of pages or the number of days that may be printed before the ink cartridge needs to be replaced.

It is also an object of the invention to compute the remaining ink capacity of an ink cartridge using information about usage patterns of a specific ink cartridge/printer combination. It is an additional object of the present invention to use such heuristic information as obtained from a variety of sources, e.g., information provided by the manufacturer of the ink cartridge or the printer, information from a third-party or information generated internally within a printer or computer system.

According to the teachings of the present invention, which is defined in detail in the appended independent claims, information about the average size of individual ink drops and the amount of ink loaded into an ink cartridge at the time of manufacture is used to calibrate the graphical ink level indicator in conjunction with, *inter alia,* information about the average usage rate or other heuristics. In one aspect of the present invention, the actual graphical or digital ink level display is depicted using page-level or day-level scale markers (e.g., 42 pages, 25 days, etc.).

In another embodiment of the present invention, the graphical display depicts the remaining print capacity of a particular ink-jet printer cartridge in user-friendly terms, e.g., in terms of the number of days or the number of pages of print capacity remaining. In yet another embodiment of the present invention, the remaining print capacity is indicated by a digital readout.

In one aspect, the present invention is an enhanced printer driver that provides significant new functionality beyond the traditional role of handling print requests directed at a printing device. The enhanced printer driver of the present invention has particular utility directed at cartridge-based printing devices, in that it can estimate and display the remaining print capacity associated with a print cartridge.

The enhanced printer driver of the present invention comprises a usage measurement software and/or firmware and /or hardware module that can calculate (either by estimation or by actual measurement) the ink or toner consumption associated with each print request that is forwarded to the printer. The enhanced printer driver maintains a database of information about the initial ink capacity of each print cartridge and the cumulative prior ink or toner consumption associated with the print cartridge.

The enhanced printer driver uses print heuristics to estimate the remaining print capacity associated with the print cartridge. This estimate of remaining print capacity may be displayed by a user by querying the enhanced printer driver of the present invention. The enhanced printer driver is capable of displaying the remaining print capacity in several different ways, e.g., in terms of the number of days, the number of pages, etc.

In an different aspect, the system and method of the present invention can additionally generate an automatic warning when the remaining print capacity associated with a printer cartridge falls below a preset threshold. This preset threshold may be specified in several different ways, e.g., in terms of the number of days, the number of pages, etc.

The enhanced printer driver of the present invention additionally includes software elements that automatically generate an alert signal when the remaining print capacity of a print cartridge falls below the preset threshold. This alert signal can be aural and/or visual, and may further be displayed either at printer or on one or more specified computer monitors.

A more complete understanding of the method and system of the present invention may be obtained by reference of the detailed description of the preferred embodiments that follow, taken in conjunction with the accompanying drawings, wherein:
FIGURE 1 is an overview diagram of a typical computer system from a hardware perspective;
FIGURE 2 is an overview diagram of a typical computer system from a software perspective;
FIGURE 3 is a simplified overview of the printing process in a typical ink-jet printer;
FIGURES 4A, 4B & 4C are simplified diagrammatic representations of the print medium path in a typical printer from the front, the side, and the top, respectively;
FIGURE 5 illustrates the details of a print head in typical ink-jet printer;
FIGURE 6 is a block diagram of the ink-level calibration, monitoring and reporting system of the present invention;
FIGURES 7A & 7B are exemplary illustrations of two page-level display modes used in the present invention; and
FIGURES 8A & 8B are exemplary illustrations of two day-level display modes used in the present invention.

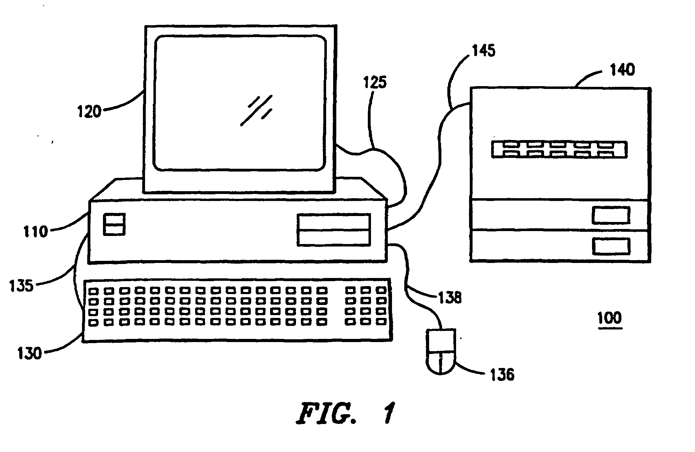

FIGURE 1 is an overview diagram of a typical computer system from a hardware perspective. A typical computer system 100 comprises a processor unit 110 connected to a display 120 via a display connection 125. The processor unit 110 is also connected to a variety of input/output devices. As shown in FIGURE 1, the processor unit 110 is connected to a keyboard 130 through a keyboard connection 135. Although not shown in FIGURE 1, the processor unit 110 may be connected to other input/output devices such as to a modem 150.

The processor unit 110 communicates with a printer 140 over a printer connection 145. In the first generation of personal computers, the printer connection 145 was typically a serial link. Later, when semiconductor memory had become affordable for use in peripheral devices, printers began to have buffers for storing information transmitted from the processor unit 110. This development lead to the printer connection 145 becoming a faster parallel link. In these earlier generations of printers, the printer connection 145 was both direct (rather than multiplexed) and unidirectional (i.e. from the processor unit 110 to the printer 140).

In contrast, with current generations of computers, it is no longer necessary for the connection 145 between the processor unit 110 and the printer 140 to be a direct physical connection. It has become possible and common to connect a printer 140 to one or more computers over a high speed network connection.

Just as the speed of the printer connection 145 has increased with successive advances in computing technology, it is also now possible for the printer connection 145 to be bidirectional in certain instances. The use of a bidirectional printer connection 145 permits the printer 140 to convey information about its status and condition back to the processor unit 110 over the same connection 145 that is used to transmit print commands and data from the processor unit 110 to the printer 140.

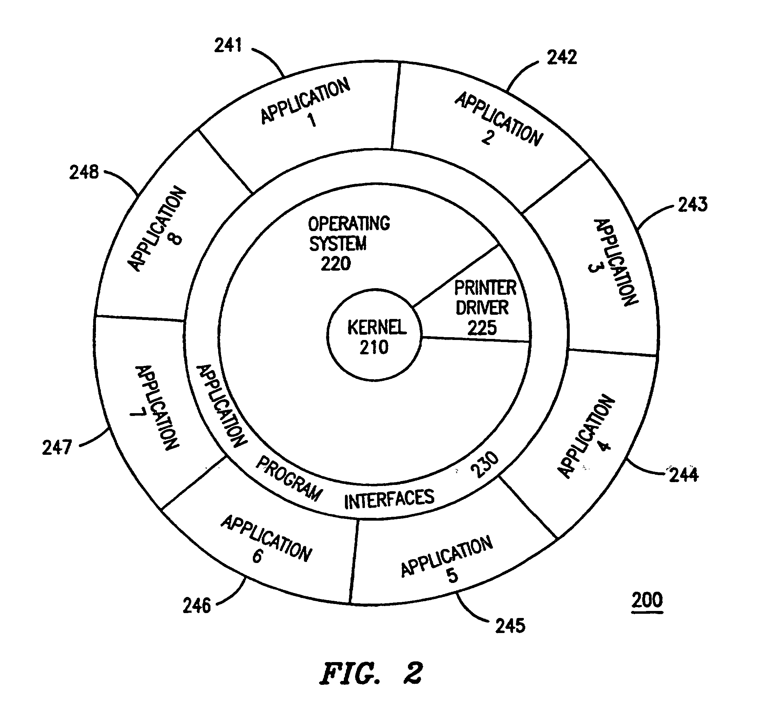

FIGURE 2 is an overview diagram of a typical computer system from a software perspective, and shows the software 200 that is associated with the computer system 100 of FIGURE 1. One perspective on the software elements of a computer system 100 is to view the various software elements as having a hierarchical relationship.

At the core of the software in a computer system is the kernel code 210. In the ubiquitous personal computer systems of the present day, this kernel is often stored on a Read Only Memory (ROM) chip. This kernel 210 is also sometimes referred to as the Basic Input/Output System (BIOS). This kernel 210 as stored in ROM is typically invariant during the entire operational life of the computer system 100.

The operating system 220 uses the kernel 210 as a gateway to the hardware of the computer system 100. The operating system 220 comprises a plurality of modules associated with different operating system functions. One such functionality that is often a part of an operating system is a printer driver 225.

The printer driver 225 is typically a specialized software element that interprets print request received by the operating system in order to adapt to the print request to the specific configuration and capabilities of a specific printing device. Printer drivers are either bundled with the operating system as part of a standard distribution, or may be added later by a user after purchasing and installing a specific printer.

The operating system 220, in turn is invoked by one or more applications (shown as elements 241-248 in FIGURE 2) through various Application Program Interfaces (APls) 230. The APls 230 thus serve as a gateway to the operating system 220 from the point of view of the application programs 241-248.

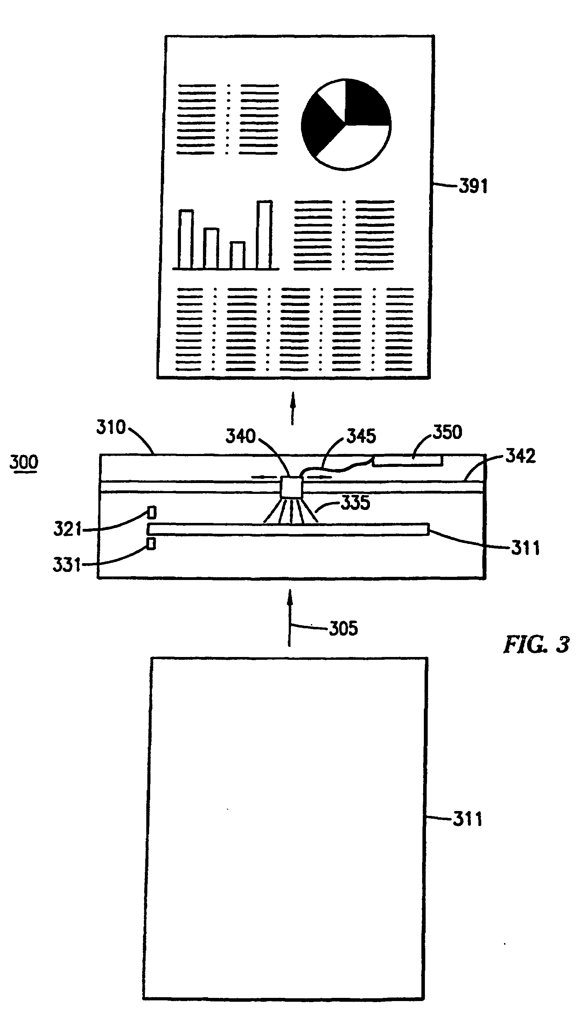

FIGURE 3 is a simplified overview of the printing process in a typical ink-jet printer. A sheet of print medium 311 is fed into the print medium transport mechanism of an ink-jet printer 140 as shown by the directional arrow 305. Each sheet of print medium 311 may be transported through the printer by a variety of mechanisms. One of the mechanisms commonly used involves using pinch rollers to grip the edge of the print medium. Only one pair of pinch rollers 321 and 331 are shown in the simplified depiction of FIGURE 3. Typically, only one of each pair of pinch rollers 321 and 331 are driven by a motor in order to transport the print medium through the printer. The other pinch roller of such a pair is typically free-rolling.

As the sheet of print medium 311 moves through the printer 140, droplets of ink 335 are sprayed on to the print medium by the print head 340. The print head 340 typically comprises an electromagnetic mechanism to control the spray of ink droplets 335 from one or more ink cartridges (not shown in FIGURE 3). A print head that is capable of only black-and-white (or one-colour) printing typically contains only one ink cartridge. In contrast, a print head that is capable of multi-colour printing typically contains either three or four ink cartridges -- one cartridge for each of the three primary colours, and sometimes, a separate and additional fourth cartridge containing black ink for generating purer "blacks" than what is typically achieved by combining the three primary colours.

The print head 340 is typically much smaller than the width of a sheet of print medium 311. Consequently, the print head 340 is slidably mounted on a slider bar 342 in such a way as to permit the print head to traverse the entire width of the sheet of print medium being printed on. The print head 340 is connected to the printer control electronics 350 by a flexible electrical connection 345. As shown in FIGURE 3, such an ink-jet printer is capable of printing both text as well as colour graphics (as schematically illustrated at 391) on the sheet of print medium 311.

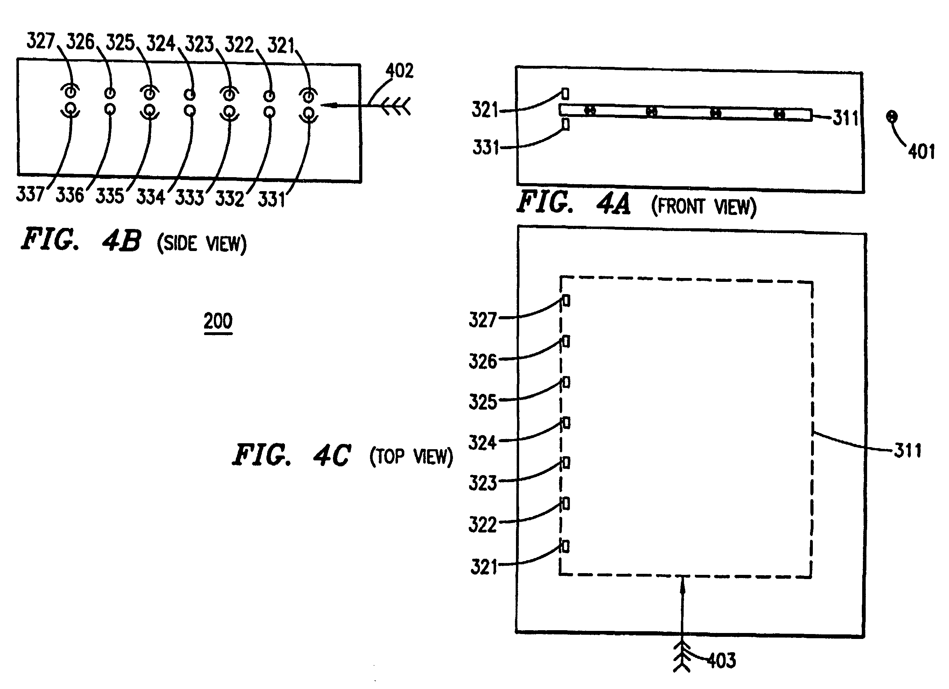

FIGURES 4A, 4B and 4C are, respectively, the simplified front, side and top, diagrammatic representations of the path of movement of the print medium in a typical ink-jet printer. As shown in FIGURE 4C, a sheet of print medium 311 may be gripped along one edge by one or more pinch rollers 321-327 at least one of which is powered. The sheet of print medium 311 is sandwiched between associated pairs of a set of top pinch rollers 321-327 and a set of bottom pinch rollers 331-337 as shown in FIGURE 4B. The print medium path is indicated by the directional arrows 401, 402 and 403 in the respective front-view, side-view and top-view depicted in FIGURES 4A, 4B & 4C.

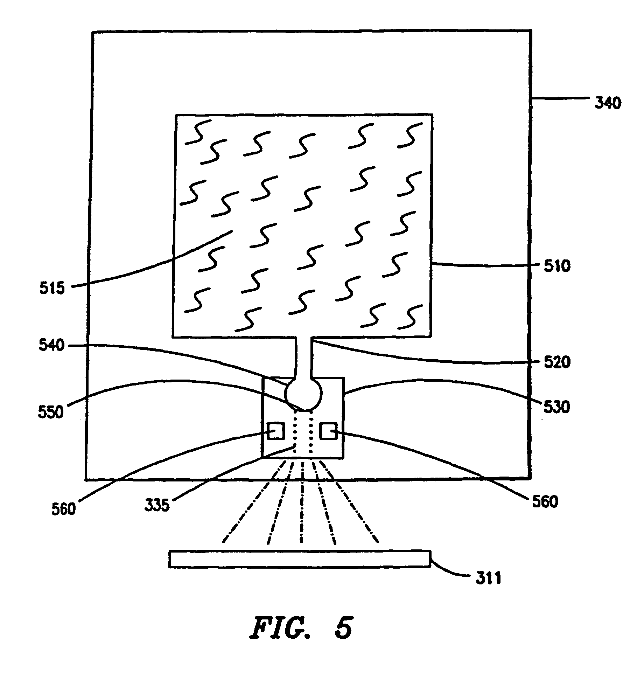

FIGURE 5 illustrates the details of a print head 340 in typical ink-jet printer. As shown in FIGURE 5, the print head 340 comprises an ink-jet cartridge 510 connected to an ejector mechanism 530. The printer cartridge 510 is often opaque as noted earlier and is also sometimes filled at the time of manufacture with spongy material 515 in order to regulate the rate of flow of ink from the cartridge 510 to the ejector mechanism 530. The ink cartridge 510 is connected to a reservoir 540 in the ejector mechanism 530. The ink reservoir 540 has an orifice 550 at its bottom end which is sized to generate ink drop 335 of a designed size.

As ink drops form and fall from the orifice 550 at the bottom of the ink reservoir 540, a plurality of electrostatic drivers 560 (two of which are shown in FIGURE 5) charge the ink drops in such a way as to propel each of the ink drops to a desired spot on the sheet of print medium 311.

In one aspect, the invention present is a technique and system for providing a calibrated graphical or digital display of remaining print capacity of a printer cartridge. The calibration of the print capacity display is designed to be in a user-friendly format, e.g., wherein the remaining print capacity is expressed in terms of the number of pages or days of printing that remains before the ink-jet cartridge needs replacement.

In one embodiment of the present invention, the remaining print capacity is estimated using retained information regarding prior printer usage patterns. In the preferred embodiment of the present invention, the printer driver module keeps track of the number of ink drops used by the print head since the last replacement of a printer cartridge. In the case of a printer having multiple ink cartridges, the printer driver keeps track of the ink usage of each of these cartridges separately.

The printer driver also keeps track of the cumulative number of pages printed and the date of last replacement of each of the ink-jet cartridges being monitored. Information about the average size of individual ink drops and the quantity of ink that is loaded into a cartridge at the time of manufacture is used to calibrate the graphical or digital ink level indicator of the present invention. In one embodiment of the present invention, the calibration is done based upon average-usage or expected-usage. Consequently, such (historical) estimation-based calibration is likely to be accurate to no more than about five percent (5%) of the actual ink usage.

The system and method of the present invention permits the remaining print capacity of a printer cartridge to be displayed in at least two display modes that may be selected by a user. Under the first option, a user is provided an estimate of the remaining print capacity on a page scale. In an alternative embodiment, the user is provided information about the remaining print capacity on a day scale. These two display options provide a user with direct feed-back for an ink resupply decision. A user who uses an ink-jet printer only occasionally is likely to prefer the remaining print capacity display to be expressed in terms of the number of pages. On the other hand, when an ink-jet printer serves as a moderately- to heavily-loaded "work horse" of a small office or home office (SOHO) environment, it is likely that such users would like the print capacity display to be expressed in terms of the number of days remaining before the cartridge needs replacement.

In an extension of this calibration technique, the present invention permits the automated generation of warning messages when the remaining print capacity of one or more ink cartridges falls below a user-specified, heuristically-generated or manufacturer-specified threshold. As discussed earlier, these thresholds can be expressed in absolute (i.e. volumetric) or relative (i.e. fractional terms or in terms of remaining number of pages or days.

Using the information from the printer driver to calibrate the remaining print capacity of ink cartridge, the threshold can be used to trigger a user alert warning of a low ink condition. Such a threshold may be specified either in terms of pages, days or as a percentage of design (initial capacity). The resulting alert message can be generated as an audible signal, as a visual warning, or both. In an extension of the present technique, the user may be automatically provided with specific cartridge part number information when such an alert is generated. This information can optionally be printed out for use by the customer or may be used to connect the customer directly to an on-line ordering service or other similar instrumentality of electronic commerce.

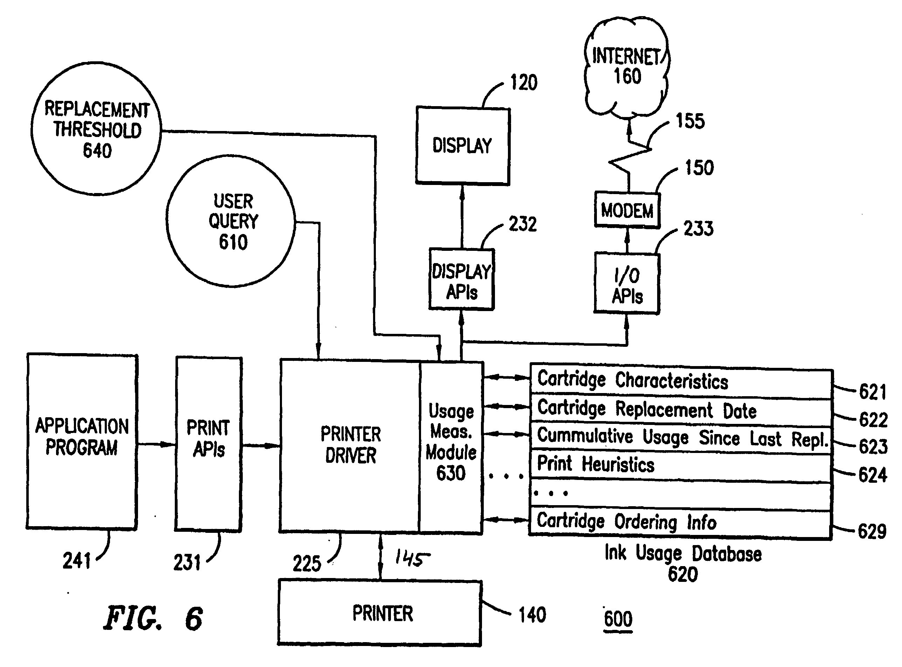

FIGURE 6 is a block diagram showing the details of the ink-level calibration, monitoring and reporting system of the present invention. As noted earlier, when a user wishes to print information from within an application program 241, the user issues a print command from inside the application. This print command, in turn, invokes one or more printing related APls 231 in a Microsoft Windows-based programming environment. The print-related APls 231, in turn, invoke the printer driver 225 that causes the requisite print commands and data to be transmitted to the printer 140 over the bidirectional printer connection 145 as shown by the bidirectional arrow 615 in FIGURE 6.

In the preferred embodiment of the present invention, the printer driver software 225 comprises a usage measurement module 630. This usage measurement module keeps track of the print commands and data sent by the printer driver software 225 to the printer 140. The usage measurement module stores this and other information related to the calibration, monitoring and reporting of printer ink levels in an ink-usage database 620.

In the preferred embodiment of the present invention, the ink usage database 620 comprises, inter alia, a cartridge characteristics field 621, a cartridge replacement date field 622, a cumulative usage counter 623, and a cartridge ordering information field 629. The cartridge characteristics field 621 includes information about the average size of an ink drop associated with a specific type of ink cartridge. The cartridge replacement date field 622 serves as a reference for a counter for monitoring and cumulating the ink usage.

The cumulative usage counter 623 is a stored data field that is generated by either actual measurement of the number of ink drops generated by the print head since the last replacement of the cartridge or by estimating the ink usage using certain print heuristics 624 stored within the ink usage database 620. The cartridge ordering information field 629 includes information about the part number and the manufacturer of the ink cartridge and other associated information needed or useful in generating a paper purchase order or in issuing an electronic purchase command.

The usage measurement module 630 keeps track of the ink usage in an ink-jet printer and has certain additional capabilities as discussed below. Every time an application program sends a print request and associated data to printer driver 225 for relaying to the printer 140, the usage measurement module 630 uses certain print heuristics 624 stored in the ink usage database 620 to determine the amount of ink that would be used up in completing the print request. Based upon user-input or stored information about the characteristics of a cartridge such as, but not limited to, its designed ink capacity and the average droplet size, the usage measurement module 630 calculates the cumulative ink usage since the last replacement of the printer cartridge 510. The updated cumulative usage information is stored in the ink usage database 620 after completed each print request.

When a user wishes to determine the remaining print capacity of an ink cartridge, the user issues a query 610 to the printer driver 225. The printer driver 225, in turn, queries the usage measurement module 630. The usage measurement module 630 uses information from the ink usage database 620 to calculate or estimate (as discussed below) the amount of ink remaining in the cartridge in question. The calculated or estimated print capacity of the ink cartridge is then displayed on the display 120 via the display APls 232.

In one embodiment of the present invention, the remaining print capacity display is depicted both graphically/digitally (i.e., using the ink level scale described earlier) as well as in practical terms such as in terms of the number of pages or days of printing that may be expected from the ink cartridge in question.

In an alternative embodiment of the present invention, a user may set a cartridge replacement warning level by specifying a replacement threshold 640 to the printer driver 225. The replacement threshold may optionally be varied by the user. In such a case, the usage measurement module 630 continually compares the remaining capacity of an ink cartridge with the user-defined or pre-specified replacement threshold 640. When the remaining print capacity of an ink cartridge falls below the replacement threshold 640, the usage measurement module 630 automatically generates a warning alert to the user's computer.

This warning alert may be either aural or visual. The aural alert option causes a sound signal to be generated by the computer alerting the user that the remaining print capacity has fallen below the pre-specified replacement threshold 640. In the case of the visual display option, the printer driver 225 generates a screen message to the user warning of the anticipated need for planning the replacement of the ink cartridge.

In an extension of the present invention, the crossing of the replacement threshold 640 causes the usage measurement module 630 of the printer drive 225 to generate a form for use by the user in ordering a replacement cartridge. Such a replacement order may also be communicated through the modem 150 to the Internet 160 or other instruments of electronic commerce over a telecommunications link 155.

It should be noted that instead of determining actual ink consumption, the usage measurement module 630 may alternatively estimate the ink consumption based upon statistical information such as the average amount of ink used per page of print medium. The usage measurement module 630 could also use other print heuristics. For example, the usage measurement module 630 could retain historical information about the frequency of ink cartridge replacement. Other print heuristics that could be used to generate warnings regarding the eminent exhaustion of ink in an ink cartridge include adaptive estimation of the remaining print capacity based upon past usage patterns.

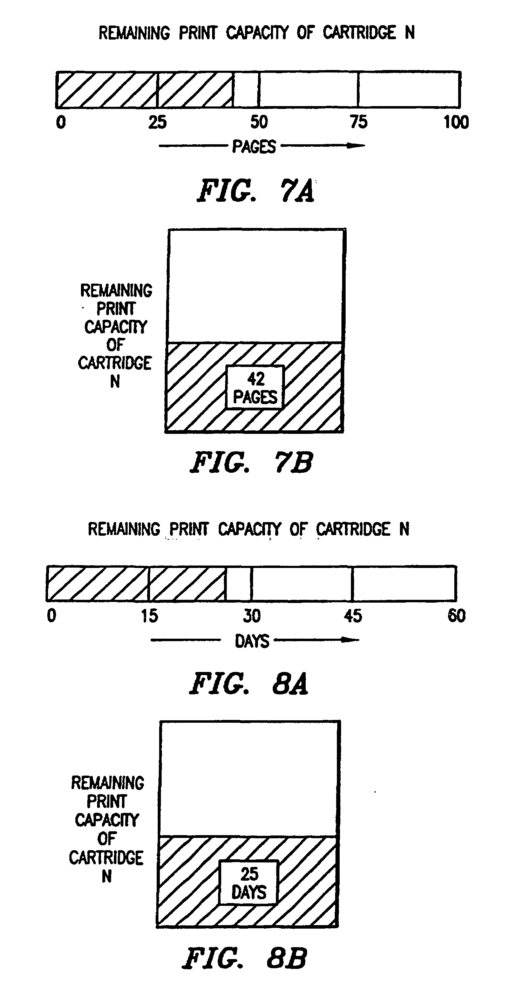

FIGURES 7A & 7B are two exemplary illustrations of the graphical page-scale ink-level display scheme of the present invention. FIGURES 8A & 8B are two exemplary illustrations of the graphical day-scale ink-level display scheme of the present invention.

It should be emphasized that the calibration, monitoring and reporting of ink and toner levels in ink and laser-printer cartridges have great systemic and functional similarity, and the above description relating to ink cartridges is equally applicable to similar issues involving laser-printer cartridges.

Although a preferred embodiment of the method and apparatus of the present invention has been illustrated in the accompanying drawings and described in the foregoing detailed description, it is to be understood that the invention is not limited to the embodiment(s) disclosed, but is capable of numerous rearrangements, modifications and substitutions without departing from the invention as set forth and defined by the following claims.

## Claims

1. A system (100) capable of handling print requests directed at a cartridge-based printing device that additionally provides a calibrated graphical display of remaining print capacity associated with the print cartridge (510) said system comprising:
software (225) operable to determine the ink or toner consumption associated with a print request;
a database (620) of information about the ink or toner capacity of said cartridge and the cumulative estimated ink or toner consumption associated with the print cartridge; and
software (630) responsive to print heuristics (624) operable to estimate the remaining print capacity associated with the print cartridge.

2. The system (100) of Claim 1, wherein the determining of the ink or toner consumption is performed by estimation.

3. The system (100) of Claim 1, wherein the determining of the unit or toner consumption is performed by measurement.

4. The system (100) of Claim 1, wherein the determining of the ink or toner consumption is performed by calculation.

5. The system (100) of any of Claims 1 to 3, for providing a calibrated graphical display (120) of estimated remaining print capacity associated with a print cartridge, wherein said remaining print capacity is estimated in terms of the number of pages that may be printed using said print cartridge.

6. The system (100) of any of Claims 1 to 3, for providing a calibrated graphical display (120) of estimated remaining print capacity associated with a print cartridge, wherein said remaining print capacity is estimated in terms of the number of days of printing that may be accomplished using said print cartridge.

7. The system (100)of any of Claims 1 to 3, for providing a calibrated graphical display (120) of estimated remaining print capacity associated with a print cartridge, wherein said remaining print capacity is estimated as a fraction of the initial print capacity of said print cartridge.

8. The system (100) of Claim 2 or Claim 3, for generating an automatic warning when said estimated remaining print capacity associated with the print cartridge falls below a preset threshold.

9. The system (100) of Claim 4, for generating an automatic warning when said estimated remaining print capacity associated with the print cartridge falls below a preset threshold (640), wherein said preset threshold is specified in terms of the number of pages that may be printed using said print cartridge.

10. The system (100) of Claim 4, for generating an automatic warning when said estimated remaining print capacity associated with the print cartridge falls below a preset threshold (640), wherein said preset threshold is specified in terms of the number of days of printing that may be accomplished using said print cartridge.

11. The system (100) of Claim 4, for generating an automatic warning when said estimated remaining print capacity associated with the print cartridge falls below a preset threshold (640), wherein said preset threshold is specified as a fraction of the initial print capacity of said print cartridge.

12. The system (100) of Claim 4, for generating an automatic warning when said estimated remaining print capacity associated with the print cartridge falls below a preset threshold (640), wherein said alert signal is a sound signal.

13. The system (100) of Claim 4, for generating an automatic warning when said estimated remaining print capacity associated with the print cartridge falls below a preset threshold (640), wherein said alert signal is a visual signal.

14. The system (100) of Claim 13, for generating an automatic warning when said estimated remaining print capacity associated with the print cartridge falls below a preset threshold (640), wherein said visual alert signal is displayed at the printer.

15. The system (100) of Claim 14, for generating an automatic warning when said estimated remaining print capacity associated with the print cartridge falls below a preset threshold (640), wherein said visual alert signal is displayed on a computer monitor.

16. The system (100) of Claim 4, for generating an automatic warning when said estimated remaining print capacity associated with the print cartridge falls below a preset threshold (640), wherein said print cartridge (510) is an ink cartridge of an ink-jet printer (140).

17. The system (100) of Claim 4, for generating an automatic warning when said estimated remaining print capacity associated with the print cartridge falls below a preset threshold (640), wherein said print cartridge is a toner cartridge of a laser printer.

18. A method of handling print requests directed at a cartridge-based printing device that additionally generates an automatic warning when the remaining print capacity associated with the printer cartridge (510) falls below a preset threshold (640), said method comprising the steps of:
determining the ink or toner consumption associated with a print request;
maintaining a database (620) of information about the ink or toner capacity of said cartridge and the cumulative calculated ink or toner consumption associated with the print cartridge;
using print heuristics to estimate the remaining print capacity associated with the print cartridge; and
generating an alert signal responsive to said estimated remaining print capacity falling below the preset threshold.

19. The method according to Claim 18, wherein the determining of the ink or toner consumption associated with a joint request is performed by calculation.

20. The method according to Claim 18, wherein the determining of the ink or toner consumption associated with a print request is performed by estimation.

## Patentansprüche

1. System (100), das in der Lage ist, Druckanforderungen abzuwickeln, die an eine Druckvorrichtung auf Kartuschenbasis gerichtet werden, die zusätzlich eine kalibrierte grafische Anzeige mit der Druckkartusche (510) verbundener verbleibender Druckkapazität bereitstellt, wobei das System umfasst:
Software (225), die so ausgeführt werden kann, dass sie den mit einer Druckanforderung verbundenen Tinten- oder Tonerverbrauch bestimmt;
eine Datenbank (620) von Informationen über das Tinten- bzw. Toner-Fassungsvermögen der Kartusche und den mit der Tintenkartusche verbundenen kumulativen geschätzten Tinten- bzw. Toner-Verbrauch; und
Software (630), die auf Druck-Heuristik (624) anspricht und so ausgeführt werden kann, dass sie die mit der Druckkartusche verbundene verbleibende Druckkapazität schätzt.

2. System (100) nach Anspruch 1, wobei das Bestimmen des Tinten- bzw. Toner-Verbrauchs durch Schätzung ausgeführt wird.

3. System (100) nach Anspruch 1, wobei das Bestimmen des Tinten- bzw. Toner-Verbrauchs durch Messung ausgeführt wird.

4. System (100) nach Anspruch 1, wobei das Bestimmen des Tinten- bzw. Toner-Verbrauchs durch Berechnung ausgeführt wird.

5. System (100) nach einem der Ansprüche 1 bis 3 zum Bereitstellen einer kalibrierten grafischen Anzeige (120) mit einer Druckkartusche verbundener geschätzter verbleibender Druckkapazität, wobei die verbleibende Druckkapazität als die Anzahl von Seiten geschätzt wird, die unter Verwendung der Druckkartusche gedruckt werden können.

6. System (100) nach einem der Ansprüche 1 bis 3 zum Bereitstellen einer kalibrierten grafischen Anzeige (120) geschätzter mit einer Druckkartusche verbundener verbleibender Druckkapazität, wobei die verbleibende Druckkapazität als die Anzahl von Druck-Tagen geschätzt wird, die unter Verwendung der Druckkartusche erreicht werden können.

7. System (100) nach einem der Ansprüche 1 bis 3 zum Bereitstellen einer kalibrierten grafischen Anzeige (120) geschätzter mit einer Druckkartusche verbundener verbleibender Druckkapazität, wobei die verbleibende Druckkapazität als ein Bruchteil der anfänglichen Druckkapazität der Druckkartusche geschätzt wird.

8. System (100) nach Ansprüche oder Anspruch 3 zum Bereitstellen einer automatischen Warnung, wenn die mit der Druckkartusche verbundene geschätzte verbleibende Druckkapazität unter einen vorgegebenen Schwellenwert fällt.

9. System (100) nach Anspruch 4 zum Erzeugen einer automatischen Warnung, wenn die mit der Druckkartusche verbundene geschätzte verbleibende Druckkapazität unter einen vorgegebenen Schwellenwert (640) fällt, wobei der vorgegebene Schwellenwert als die Anzahl von Seiten angegeben wird, die unter Verwendung der Druckkartusche gedruckt werden können.

10. System (100) nach Anspruch 4 zum Erzeugen einer automatischen Warnung, wenn die mit der Druckkartusche verbundene geschätzte verbleibende Druckkapazität unter einen vorgegebenen Schwellenwert (640) fällt, wobei der vorgegebene Schwellenwert als die Anzahl von Druck-Tagen angegeben wird, die unter Verwendung der Druckkartusche erreicht werden können.

11. System (100) nach Anspruch 4 zum Erzeugen einer automatischen Warnung, wenn die mit der Druckkartusche verbundene geschätzte verbleibende Druckkapazität unter einen vorgegebenen Schwellenwert (640) fällt, wobei der vorgegebene Schwellenwert als ein Bruchteil der anfänglichen Druckkapazität der Druckkartusche angegeben wird.

12. System (100) nach Anspruch 4 zum Erzeugen einer automatischen Warnung, wenn die mit der Druckkartusche verbundene geschätzte verbleibende Druckkapazität, unter einen vorgegebenen Schwellenwert (640) fällt, wobei das Warnsignal ein akustisches Signal ist.

13. System (100) nach Anspruch 4 zum Erzeugen einer automatischen Warnung, wenn die mit der Druckkartusche verbundene geschätzte verbleibende Druckkapazität unter einen vorgegebenen Schwellenwert (640) fällt, wobei das Warnsignal ein optisches Signal ist.

14. System (100) nach Anspruch 13 zum Erzeugen einer automatischen Warnung, wenn die mit der Druckkartusche verbundene geschätzte verbleibende Druckkapazität unter einen vorgegebenen Schwellenwert (640) fällt, wobei das optische Warnsignal an dem Drucker angezeigt wird.

15. System (100) nach Anspruch 14 zum Erzeugen einer automatischen Warnung, wenn die mit der Druckkartusche verbundene geschätzte verbleibende Druckkapazität unter einen vorgegebenen Schwellenwert (640) fällt, wobei das optische Warnsignal auf einem Computermonitor angezeigt wird.

16. System (100) nach Anspruch 4 zum Erzeugen einer automatischen Warnung, wenn die mit der Druckkartusche verbundene geschätzte verbleibende Druckkapazität unter einen vorgegebenen Schwellenwert (640) fällt, wobei die Druckkartusche (510) eine Tintenkartusche eines Tintenstrahldruckers (140) ist.

17. System (100) nach Anspruch 4 zum Erzeugen einer automatischen Warnung, wenn die mit der Druckkartusche verbundene geschätzte verbleibende Druckkapazität unter einen vorgegebenen Schwellenwert (640) fällt, wobei die Druckkartusche eine Tonerkartusche eines Laserdruckers ist.

18. Verfahren zum Abwickeln von Druckanforderungen, die an eine Druckvorrichtung auf Kartuschenbasis gerichtet werden, die zusätzlich eine automatische Warnung erzeugt, wenn die mit der Druckerkartusche (510) verbundene verbleibende Druckkapazität unter einen vorgegebenen Schwellenwert (640) fällt, wobei das Verfahren die folgenden Schritte umfasst.
Bestimmen des mit einer Druckanforderung verbundenen Tinten- oder Toner-Verbrauchs;
Führen einer Datenbank (620) von Informationen über das Tinten- bzw. Toner-Fassungsvermögen der Kartusche und den mit der Druckkartusche verbundenen kumulativen berechneten Tinten- bzw. Toner-Verbrauch;
Nutzen von Druck-Heuristik, um die mit der Druckkartusche verbundene verbleibende Druckkapazität zu schätzen; und
Erzeugen eines Warnsignals in Reaktion darauf, dass die verbleibende Druckkapazität unter den vorgegebenen Schwellenwert fällt.

19. Verfahren nach Anspruch 18, wobei das Bestimmen des mit einer Druckanforderung verbundenen Tinten- bzw. Toner-Verbrauchs durch Berechnung ausgeführt wird.

20. Verfahren nach Anspruch 18, wobei das Bestimmen des mit einer Druckanforderung verbundenen Tinten- bzw. Toner-Verbrauchs durch Schätzung ausgeführt wird.

## Revendications

1. Système (100) capable de traiter des commandes d'impression adressées à un dispositif d'impression à base de cartouche qui fournit de plus un affichage graphique calibré de la capacité d'impression restante liée à la cartouche d'impression (510), ledit système comprenant :
un logiciel (225) utilisé pour déterminer la consommation d'encre on de toner, liée à une demande d'impression ;
une base de données (620) pour les informations concernant la capacité d'encre ou de toner de ladite cartouche et de la consommation cumulée estimée d'encre ou de toner, liée à la cartouche d'impression ; et
un logiciel (630) sensible à l'heuristique d'impression (624) utilisé pour estimer la capacité d'impression restante liée à la cartouche d'impression.

2. Système (100) selon la revendication 1, dans lequel la détermination de la consommation d'encre ou de toner est effectuée par estimation.

3. Système (100) selon la revendication 1, dans lequel la détermination de la consommation d'encre ou de toner est effectuée par mesure.

4. Système (100) selon la revendication 1, dans lequel la détermination de la consommation d'encre ou de toner est effectuée par calcul.

5. Système (100) selon l'une quelconque des revendications 1 à 3, pour fournir un affichage graphique calibré (120) de la capacité d'impression restante estimée, liée à une cartouche d'impression, dans lequel ladite capacité d'impression restante est estimée en termes du nombre de pages qui peuvent être imprimées en utilisant ladite cartouche d'impression.

6. Système (100) selon l'une quelconque des revendications 1 à 3, pour fournir un affichage graphique calibré (120) de la capacité d'impression restante estimée, liée à une cartouche d'impression, dans lequel ladite capacité d'impression restante est estimée en termes du nombre de jours d'impression pouvant être atteint en utilisant ladite cartouche d'impression.

7. Système (100) selon l'une quelconque des revendications 1 à 3, pour fournir un affichage graphique calibré (120) de la capacité d'impression restante estimée, liée à une cartouche d'impression, dans lequel ladite capacité d'impression restante est estimée en tant que fraction de la capacité d'impression initiale de ladite cartouche d'impression.

8. Système (100) de la revendication 2 ou 3, pour générer un avertissement automatique lorsque ladite capacité d'impression restante liée à la cartouche d'impression chute au-dessous d'un seuil pré-établi.

9. Système (100) de la revendication 4, pour générer un avertissement automatique lorsque ladite capacité d'impression restante estimée, liée à la cartouche d'impression chute au-dessous d'un seuil pré-établi (640), dans lequel ledit seuil pré-établi est précisé en termes du nombre de pages qui peut être imprimé en utilisant ladite cartouche d'impression.

10. Système (100) de la revendication 4, pour générer un avertissement automatique lorsque ladite capacité d'impression restante estimée, liée à la cartouche d'impression chute au-dessous d'un seuil pré-établi (640), dans lequel ledit seuil pré-établi est précisé en termes du nombre de jours d'impression qui peut être atteint en utilisant ladite cartouche d'impression.

11. Système (100) de la revendication 4, pour générer un avertissement automatique lorsque ladite capacité d'impression restante estimée, liée à la cartouche d'impression chute au-dessous d'un seuil pré-établi (640), dans lequel ledit seuil pré-établi est précisé en tant que fraction de la capacité d'impression initiale de ladite cartouche d'impression.

12. Système (100) de la revendication 4, pour générer un avertissement automatique lorsque ladite capacité d'impression restante estimée, liée à la cartouche d'impression chute au-dessous d'un seuil pré-établi (640), dans lequel ledit signal d'alerte est un signal sonore.

13. Système (100) de la revendication 4, pour générer un avertissement automatique lorsque ladite capacité d'impression restante estimée, liée à la cartouche d'impression chute au-dessous d'un seuil pré-établi (640), dans lequel ledit signal d'alerte est un signal visuel.

14. Système (100) de la revendication 13, pour générer un avertissement automatique lorsque ladite capacité d'impression restante estimée, liée à la cartouche d'impression chute au-dessous d'un seuil pré-établi (640), dans lequel ledit signal d'alerte visuel est affiché sur l'imprimante.

15. Système (100) de la revendication 14, pour générer un avertissement automatique lorsque ladite capacité d'impression restante estimée, liée à la cartouche d'impression chute au-dessous d'un seuil pré-établi (640), dans lequel ledit signal d'alerte visuel est affiché sur un écran d'ordinateur.

16. Système (100) de la revendication 4, pour générer un avertissement automatique lorsque ladite capacité d'impression restante estimée, liée à la cartouche d'impression chute au-dessous d'un seuil pré-établi (640), dans lequel ladite cartouche d'impression (510) est une cartouche à encre ou une imprimante à jet d'encre (140).

17. Système (100) de la revendication 4, pour générer un avertissement automatique lorsque ladite capacité d'impression restante estimée, liée à la cartouche d'impression chute au-dessous d'un seuil pré-établi (640), dans lequel ladite cartouche d'impression est une cartouche de toner d'une imprimante au laser.

18. Procédé pour le traitement de demandes d'impression adressées à un dispositif d'impression à base de cartouche qui génère de plus un avertissement automatique lorsque la capacité d'impression restante liée à la cartouche d'imprimante (510) chute au-dessous d'un seuil pré-établi (640), ledit procédé comprenant les étapes de :
détermination de la consommation d'encre ou de toner liée à une demande d'impression ;
maintien d'une base de données (620) pour des informations sur la capacité d'encre on de toner de ladite cartouche et la consommation cumulée, calculée d'encre et de toner, liée à la cartouche d'encre ;
utilisation de l'heuristique d'impression pour estimer la capacité d'impression restant liée à la cartouche d'impression ; et
production d'un signal d'alerte sensible à ladite capacité d'impression restante estimée qui chute au-dessous du seuil pré-établi.

19. Procédé selon la revendication 18, dans lequel la détermination de la consommation d'encre ou de toner liée à une demande commune est effectuée par calcul.

20. Procédé selon la revendication 18, dans lequel la détermination de la consommation d'encre on de toner liée à une demande d'impression est effectuée par estimation.
